Europäisches Patentamt

**European Patent Office**

**Office européen des brevets**

(19)

(11) Publication number : **0 069 093**
**B1**

(12)

# EUROPEAN PATENT SPECIFICATION

(45) Date of publication of patent specification :
07.11.84

(51) Int. Cl.³ : **E 06 B 7/16, B 65 G 69/00**

(21) Application number : **82850098.3**

(22) Date of filing : **05.05.82**

(54) **Loading dock seal.**

(30) Priority : **04.06.81 SE 8103514**

(43) Date of publication of application :
**05.01.83 Bulletin 83/01**

(45) Publication of the grant of the patent :
**07.11.84 Bulletin 84/45**

(84) Designated contracting states :
**AT BE CH DE FR GB IT LI LU NL SE**

(56) References cited :
**DE-C- 1 926 439**
**US-A- 3 714 745**

(73) Proprietor : **TRELLEBORG AB**
**Box 501**
**S-231 01 Trelleborg (SE)**

(72) Inventor : **Söderström, Hans Sture**
**Ekevägen 34**
**S-231 00 Trelleborg (SE)**

(74) Representative : **Wallin, Bo-Göran et al**
**AWAPATENT AB Box 5117**
**S-200 71 Malmö (SE)**

Jouve, 18, rue St-Denis, 75001 Paris, France

## Description

The present invention relates to a loading dock seal with inflatable cushion-shaped sealing elements which are secured to a wall surface around a loading dock opening and are coupled with a blower for inflation and engagement against a vehicle body portion positioned adjacent the loading dock opening and which are connected with retracting means adapted yieldingly to counteract the inflation and, after the air supply from the blower has been shut off, to press the air out of the sealing elements and to remove them from the truck at least the vertical sealing elements being arcuate in horizontal cross-section. Such loading dock seals are previously known from, for example, Swedish Patent 7608109-0 (400, 255). In this case, the sealing elements are in the form of an inflatable hose which supports itself against wall elements projecting from the wall surface and surrounding the truck profile. However, from inter alia U.S. Patents 3 391 503 and 3 714 745 it is also known to form the loading dock seal from made-to-measure inflatable cushions rigidly secured to the wall surface and engaging against the vehicle body portion when inflated.

The prior art constructions suffer from a number of disadvantages in respect of their adaptability to varying sizes of the truck profiles, and furthermore they require an unnecessarily large number of mounting elements, for mounting on the wall surface. The present invention has for its object to eliminate inter alia these disadvantages and therefore provides a loading dock seal of the above-mentioned type which is characterised in that at least the cushion-shaped sealing elements which are adapted to seal against the vertical sides of the truck profile and which, in horizontal cross-section, are arcuate, are secured to the wall surface along a pivot line which extends longitudinally of the sealing element and about which the sealing element can pivot during its inflation, and are formed in such a manner that at least a portion of the sealing element supports itself against the wall surface outside the pivot line in order to pivot the sealing element during inflation about the pivot line and to press it against the truck profile.

Embodiments of the invention are indicated in claims 2 and 3. The invention will be described in more detail in the following, reference being had to the accompanying drawings.

Figure 1 shows a loading dock seal according to the invention in the inflated state.

Figure 2 is a section along line II-II in Fig. 1.

Figure 3 is a section along line III-III in Fig. 2.

Figure 4 shows, on a larger scale, the encircled portion IV in Fig. 2.

Figure 5 is a plan view of, inter alia, a frame for the loading dock seal which, however, is not shown in this Figure.

Figure 6 illustrates schematically a section along line VI-VI in Fig. 1.

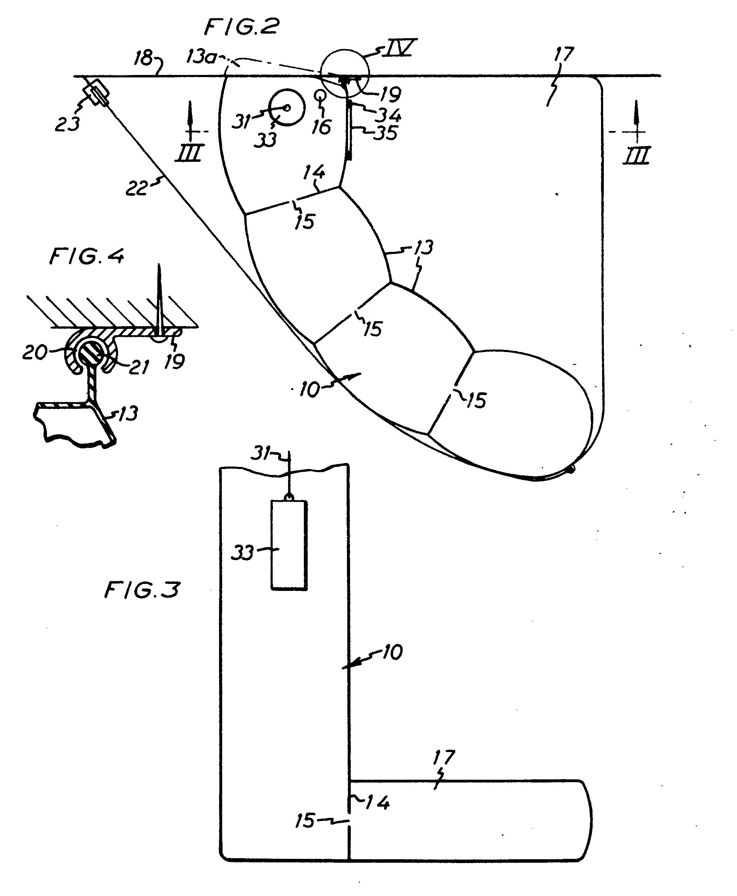

As will be seen from the accompanying drawings, the loading dock seal is provided in known manner with inflatable cushion-shaped sealing elements 10, 11, 12. The sealing elements 10 and 11 are adapted to seal against the vertical sides of a vehicle body portion positioned in the loading dock seal, while the sealing element 12 is adapted to seal against the upper side of said body portion. The sealing elements are constructed in known manner of a number of hose-shaped cushions which communicate with one another through holes 15. Figs. 2 and 3 illustrate a method of making the sealing elements. The vertical sealing element 10 thus has a number of part cushions or elements 13 separated by a partition 14 having throughholes 15. The remaining sealing elements are designed in similar manner. The sealing elements 10 and 11 are not entirely tight, but have exhaust ports 16 through which air is constantly discharged during the time the loading dock seal is inflated. These ports also allow the air to escape when the loading dock seal is not being used.

The sealing elements 10 and 11 are provided at their lower ends with a projection 17 in the form of a cushion which is separated from the remaining part cushions 13 by means of a partition 14 and communicates with the part cushions via a connecting hole 15. By the part element 17, air is prevented from entering the loading dock from below during use of the loading dock seal.

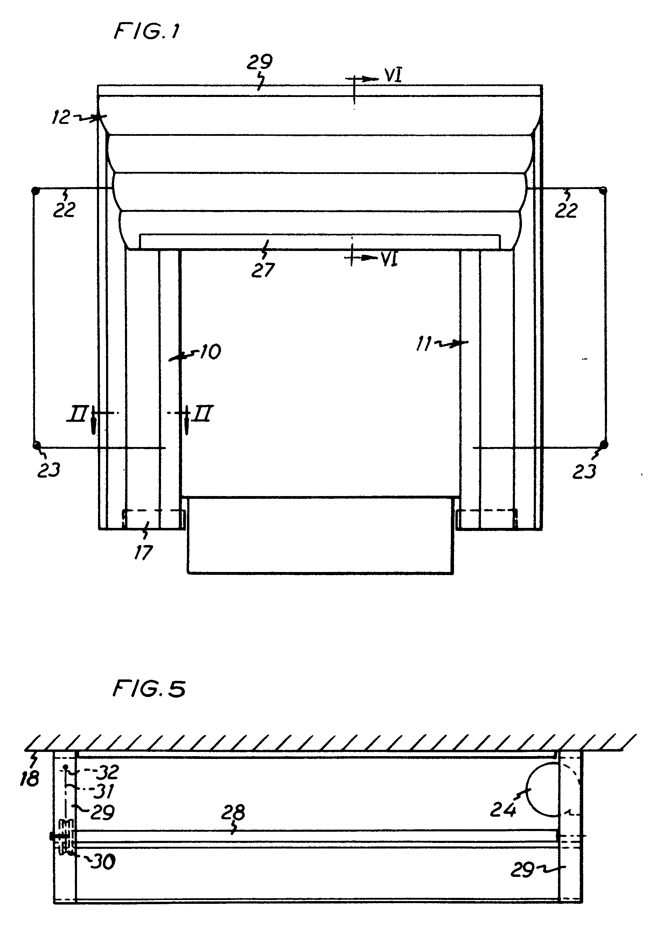

The vertical sealing elements 10 and 11 are secured to the wall surface 18 by means of an attachment profile 19 having an undercut groove 20 in which a thickened portion 21 of the innermost part element 13 of the sealing element is inserted. The element or profile 19 thus defines a pivot line about which the sealing elements 10 and 11 can pivot. As will be seen from Fig. 2, the innermost part element 13 on the sealing element 10 (as well as on the sealing element 11) has been so formed that it will, upon inflation, positively swing the entire sealing element 10 about the profile 19. The innermost part cushion 13 on the sealing element 10 has been given the form which is indicated by the dash-and-dot line in Fig. 2 so that the cushion, with its portion 13a, will brace itself against the wall surface 18 and force the sealing element to swing around the pivot line or profile 19 in a counterclockwise direction relative to the drawing. In this manner, the entire loading dock seal will be stabilized and securely pressed against the vehicle body portion positioned in the seal. Furthermore, Figs. 1 and 2 show retracting elements 22 in the form of high-elastic tensioning cords which are secured to the sealing elements 10 and 11 and extend over guide pulleys 23 mounted on the wall surface 18. These elastic cords thus serve to retract the loading dock seal to its position of rest after the supply of air to the sealing elements has been interrupted.

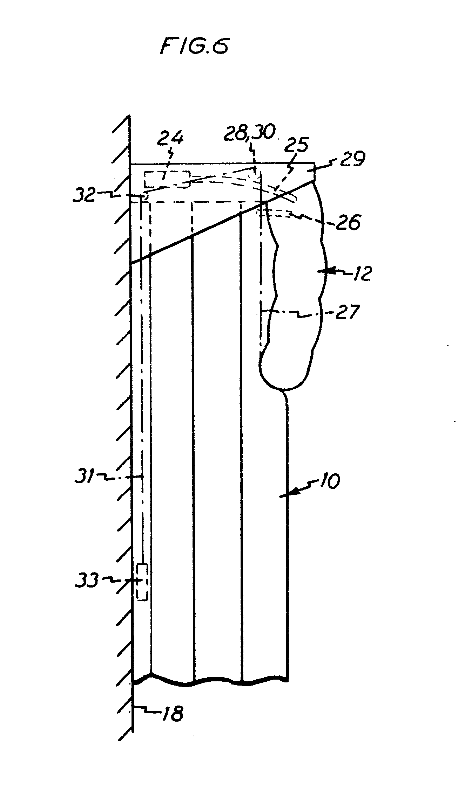

As will appear especially from Fig. 6, the air supply blower 24 belonging to the loading dock seal is connected with the horizontal sealing element 12 via a hose 25.

The upper sealing element 12 is then connected, via hoses 26, with the upper end of each sealing element 10 and 11. Inflation of the sealing elements 10 and 11 thus occurs via the horizontal sealing element 12 which, at its outer end, is connected to a screen 27 attached to a rotatable bar 28 which is mounted in brackets 29 secured to the wall surface 18 and serving to hold up the loading dock seal and to carry the upper sealing element 12. The bar 28 is rotatably mounted at its ends and carries at one end a rope drum 30 connected with a rope 31 which, via a guide roller 32, extends down into the innermost part cushion 13 of the sealing element 10 and which, at its lower end, carries a plummet 33. To facilitate attachment of the plummet 33, the sealing element 10 is provided with a cover 35 which is closed by means of a burr fastener 34. In the position of rest, the plummet 33 has travelled to its lowermost position while unwinding the rope 31 from the rope drum 30. At the same time, the screen 27 has been rolled up on the bar 28. When the blower 24 is started, the air thus is blown via the hose 25 into the upper sealing element 12 which now begins to expand successively, the expansion being counteracted by the counterweight of the plummet 33. This implies a counterpressure, as a result of which the major proportion of the air will already at this stage flow via the hoses 26 to the sealing elements 10 and 11 which therefore expand, while stretching the elastic cords 22, and are pressed against the vehicle body portion. At the same time, the sealing element 12 continue to expand, while unrolling the screen 27 from the bar 28 so that the rope 31 is wound upon the rope drum 30 and the plummet is pulled to its upper position. Because of the design of the inner part cushion 13 of the sealing elements 11, 12, the sealing elements 10 and 11 will be pressed against the vehicle body portion with additional force. As a result of this design of the loading dock seal, and especially of the injection of air via the upper sealing element, the inflation will proceed in the correct sequence, i. e. the side seals are inflated almost completely before complete inflation of the upper sealing element 12.

As already pointed out, the sealing elements 10 and 11 of the loading dock seal are not completely tight, but air escapes continuously via, inter alia, the exhaust ports 16. When the loading dock seal is no longer to be used, the air supply from the blower 24 is interrupted, and the air will then escape through the exhaust ports 16. The air is pressed out of the loading dock seal in the reverse sequence in that the lateral sealing elements 10, 11 are pulled in by the elastic cords 22 so that, finally, also the upper sealing element 12 goes free and can be pulled up in that the screen 27 is again rolled up on the bar 28 under the action of the tractive power exerted by the plummet 33.

## Claims

1. A loading dock seal with inflatable cushion-shaped sealing elements (10, 11, 12) which are secured to a wall surface (18) around a loading dock opening and are coupled with a blower (24) for inflation and engagement against a vehicle body portion positioned adjacent the loading dock and which are connected with retracting means (22, 27-33) adapted yieldingly to counteract the inflation and, after the air supply from the blower has been shut off, to press the air out of the sealing elements and to remove them from the truck, at least the vertical sealing elements (10, 11) being arcuate in horizontal cross-section, characterised in that at least the cushion-shaped sealing elements (10, 11) which are adapted to seal against the vertical sides of the vehicle body portion are secured to the wall surface (18) along a pivot line (19) which extends longitudinally of the sealing element and about which the sealing element can pivot during its inflation, and are formed in such a manner that at least a portion (13a) of the sealing element supports itself against the wall surface outside the pivot line in order to positively swing the sealing element during inflation about the pivot line and to press it against the vehicle body portion.

2. A loading dock seal as claimed in claim 1, characterised in that the pivotally mounted sealing elements (10, 11) are in the form of a series of interconnected part cushions (13), of which the one nearest the wall surface is overdimensioned to form a pusher member (13a) bracing itself against the wall surface (18) outside the pivot line (19).

3. A loading dock seal as claimed in claim 1 or 2, in which an upper substantially horizontal inflatable sealing element (12) is connected with a screen (27) adapted to be rolled up on a bar (28) having a rope drum (30) which is connected with a rope (31) for controlling the rolling-up of the screen on the bar, characterised in that the rope (31) passes over guide pulleys (32) or the like and extends down into one of the vertical sealing elements (10, 11), said rope carrying at its lower end a plummet (33) serving as a retracting means for the horizontal sealing element (12) through which air is supplied from the blower to the vertical sealing elements (10, 11) in which constantly open air exhaust ports (16) are provided.

## Ansprüche

1. Torabdichtung mit aufblasbaren, kissenförmigen Abdichtelementen (10, 11, 12), die an einer Wandfläche (18) rund um ein Verladetor befestigt und mit einem Gebläse (24) zum Aufblasen und Anpressen gegen einen sich am Verladetor befindenden Fahrzeugaufbauteil verbunden sowie ausserdem mit Rückführmitteln (22, 27-33) verbunden sind, die dem Aufblasen nachgiebig entgegenwirken, um nach Abstellen der Luftzufuhr vom Gebläse die Luft aus den Abdichtelementen hinauszupressen und die Abdichtelemente vom Lastkraftwagen zu entfernen, wobei zumindest die senkrechten Abdichtelemente (10, 11) in waagerechtem Querschnitt bogenförmig sind, dadurch gekennzeichnet, dass zumindest die kissenförmigen Abdichtelemente (10, 11), die zur Abdichtung gegen die senkrechten Seiten des Fahrzeugaufbauteils bestimmt sind, an der Wandfläche (18) längs einer sich in Längsrichtung des Abdichtelements erstreckenden Schwenklinie (19) befestigt sind, um die das Abdichtelement während seines Aufblasens schwenkbar ist, und in einer solchen Weise ausgebildet sind, dass sich zumindest ein Teil (13a) des Abdichtelements gegen die Wandfläche ausserhalb der Schwenklinie abstützt, um das Abdichtelement während des Aufblasens zwangsläufig um die Schwenklinie zu schwenken und gegen den Fahrzeugaufbauteil anzupressen.

2. Abdichtung nach Anspruch 1, dadurch gekennzeichnet, dass die schwenkbar befestigten Abdichtelemente (10, 11) aus einer Reihe miteinander verbundener Teilkissen (13) bestehen, von denen das der Wandfläche am nächsten liegende Teilkissen überdimensioniert ist, um einen Nachschiebeteil (13a) zu bilden, der sich gegen die Wandfläche (18) ausserhalb der Schwenklinie (19) abstützt.

3. Torabdichtung nach Anspruch 1 oder 2, bei der ein oberes, im wesentlichen waagerechtes aufblasbares Abdichtelement (12) mit einem auf einer Stange (28) aufrollbaren Tuch (27) verbunden ist, wobei die Stange (28) eine mit einem Seil (31) verbundene Seiltrommel (30) zur Einregelung des Aufrollens des Tuchs auf die Stange besitzt, dadurch gekennzeichnet, dass das Seil (31) über Umlenkrollen (32) od. dgl. läuft und sich in eines der senkrechten Abdichtelemente (10, 11) hinuntererstreckt sowie an seinem unteren Ende ein Lot (33) trägt, das das Rückführglied für das waagerechte Abdichtelement (12) bildet, durch welches Luft vom Gebläse zu den senkrechten Abdichtelementen (10, 11) zugeführt wird, in denen stets offene Luftabfuhrlöcher (16) vorgesehen sind.

**Revendications**

1. Joint de rampe de chargement muni d'éléments d'étanchéité (10, 11, 12) ayant la forme de coussins convenables, qui sont fixés à la surface (18) d'une paroi autour d'une ouverture de la rampe de chargement et qui sont reliés à un ventilateur (24) assurant leur gonflage et qui sont destinés à venir en appui contre une partie de carrosserie de véhicule placée près de la rampe de chargement, les éléments étant reliés à des dispositifs (22, 27-33) de mise en retrait destinés à contrarier élastiquement le gonflage et, après arrêt de la transmission d'air par le ventilateur, à chasser l'air des éléments d'étanchéité et à les éloigner du camion, les éléments verticaux d'étanchéité (10, 11) au moins ayant une section horizontale courbe, caractérisé en ce que les éléments d'étanchéité (10, 11) en forme de coussins qui sont destinés à assurer l'étanchéité contre les côtés verticaux de la partie de carrosserie de véhicule au moins sont fixés à la surface (18) de paroi le long d'un axe d'articulation (19) disposé longitudinalement par rapport à l'élément d'étanchéité et autour duquel cet élément peut pivoter pendant son gonflage, et les éléments sont formés de manière qu'une partie au moins (13a) de l'élément d'étanchéité se supporte elle-même contre la surface de paroi à l'extérieur de l'axe d'articulation afin que l'élément d'étanchéité pivote positivement autour de l'axe d'articulation pendant le gonflage et soit repoussé contre la partie de carrosserie de véhicule.

2. Joint de rampe de chargement selon la revendication 1, caractérisé en ce que les éléments d'étanchéité (10, 11) qui sont montés afin de pouvoir pivoter sont sous forme d'une série de coussins partiels raccordés (13), le plus proche de la surface de la paroi étant surdimensionné afin qu'il forme un organe de poussée (13a) prenant lui-même appui contre la surface de paroi (18) à l'extérieur de l'axe d'articulation (19).

3. Joint de rampe de chargement selon l'une des revendications 1 et 2, dans lequel un élément supérieur d'étanchéité (12) gonflable et sensiblement horizontal est relié à une grille souple (27) destinée à s'enrouler sur une barre (28) ayant un tambour (30) d'enroulement de câble et raccordée à un câble (31) qui règle l'enroulement de la grille sur la barre, caractérisé en ce que le câble (31) passe sur des poulies de guidage (32) ou analogue et descend dans l'un des éléments verticaux d'étanchéité (10, 11), le câble portant, à son extrémité inférieure, un contrepoids (33) jouant le rôle d'un dispositif de mise en retrait de l'élément horizontal d'étanchéité (12) par lequel l'air est transmis du ventilateur aux éléments verticaux d'étanchéité (10, 11) qui comportent des canaux (16) d'évacuation d'air qui sont constamment ouverts.

0 069 093

FIG.1

FIG.5

1

0 069 093

FIG.2

FIG.4

FIG.3

2

FIG.6